Europäisches Patentamt

European Patent Office

Office européen des brevets

(11) Publication number: **0 062 473**
**B1**

(12) EUROPEAN PATENT SPECIFICATION

(45) Date of publication of patent specification: **11.10.89**

(21) Application number: **82301638.1**

(22) Date of filing: **29.03.82**

(51) Int. Cl.⁴: **G 06 K 7/10, B 07 C 3/14,**
**G 06 K 19/06, G 01 P 3/68,**
**G 01 S 17/74**

(54) Method and apparatus for sensing and identifying information within a large interrogation zone.

(30) Priority: **30.03.81 US 249180**

(43) Date of publication of application:
**13.10.82 Bulletin 82/41**

(45) Publication of the grant of the patent:
**11.10.89 Bulletin 89/41**

(84) Designated Contracting States:
**AT BE DE FR GB IT NL SE**

(56) References cited:
**FR-A-2 127 096**
**LU-A- 67 809**
**US-A-3 090 870**
**US-A-3 432 673**
**US-A-3 604 805**
**US-A-3 727 184**
**US-A-3 808 447**
**US-A-3 847 346**

**IBM TECHNICAL DISCLOSURE BULLETIN, vol.
14, no. 7, December 1971, pages 2201-2203,
New York, US; E.W. ROSEN et al.: "General line
centering with optional video consolidation"**

(73) Proprietor: **MINNESOTA MINING AND
MANUFACTURING COMPANY
3M Center, P.O. Box 33427
St. Paul, Minnesota 55133 (US)**

(72) Inventor: **Look, Thomas F.
2501 Hudson Road P.O. Box 33427
St. Paul Minnesota 55133 (US)**

(74) Representative: **Baillie, Iain Cameron et al
c/o Ladas & Parry Isartorplatz 5
D-8000 München 2 (DE)**

## Description

**Background of the Invention**

This invention relates to a method and an apparatus for machine extracting information from an object that is within a relatively large inspection or interrogation zone.

There are numerous circumstances in which it is desirable to identify information about an object while that object is within or passes through an inspection field or zone. The information can be either affixed to the object such as destination tags on luggage, addresses on letters, or descriptive information on the sides of railroad cars, or the information can relate to the object itself, such as the speed and location of a moving vehicle. If the object or the information on the object has a defined location and orientation with respect to the inspection field or zone, it is generally possible to utilize a machine to read and process the information. For instance, French Publication FR—A—2,127,096 (Pichon et al.) discloses an apparatus for identification of objects bearing information coded on a retroflective surface which has a predetermined orientation to the apparatus. The apparatus disclosed therein conducts a sequential scanning or irradiation with a light beam at a predetermined orientation of objects bearing bar codes of varying reflective power and detects reflected light with a receiver located near the transmitter. The light beam has a width equal in width or smaller than the bars of the bar code. The light received from the cumulative series of irradiations is then processed to eliminate residual noise and thereby extract the coded information. If on the other hand the object's or the information's location and/or orientation is undefined, a manual interface is generally required, or some other provision must be made to somehow locate the object or information within the field. This task is made easier if at least the location and the orientation of the object and any information thereon can be controlled so that its location at a given time is known. If control over the object is impossible, it has generally not been feasible to automate a method or apparatus for locating the object and extracting the information therefrom. This is in part due to the memory capacity that is required for storing and processing the total information contained within a large field in order to locate the object and extract the desired information, as well as the relatively large amount of time that would be involved in doing this.

**Summary of the Invention**

The present invention is directed to a method and an apparatus for locating the object and/or information, and for extracting the information from the object, as that object passes through, or while that object is within a large interrogation zone, without requiring that the object or the information contained thereon have a defined location and orientation with respect to the zone.

According to a feature of one aspect of this invention there is provided a method of sensing and identifying an object within an interrogation zone comprising:

incorporating on the object a retroreflective material designed to reflect incident electromagnetic radiation in a concentrated cone surrounding the axes of incidence;

irradiating the zone with electromagnetic radiation by a source having a predetermined location with respect to the zone, thereby establishing a known axis of incidence for the radiation from the source;

sensing by a sensing means the zone for electromagnetic radiation which is reflected off of objects within the zone;

locating the sensing means adjacent the known axis of incidence from the irradiation source, thus receiving radiation originating from the irradiation source and reflected by the retroreflective material, but tending to eliminate radiation from radiation sources which is specularly reflected by areas within the zone;

selecting sensed radiation that is reflected by the retroreflective material; and

extracting information from the object having the retroreflective material,

characterized in that said object has an unknown position and orientation within said interrogation zone; said interrogation zone is larger than said retroreflective material on said object; said irradiating comprises irradiating the entirety of said zone at one time; said sensing comprises sensing the entirety of said interrogation zone at one time; and radiation is selected from the entirety of said sensed radiation to locate said object within said interrogation zone.

According to a further feature of said one aspect there is provided a method of machine sensing and identifying of information about an object having an unknown position and orientation within a large interrogation zone, which object contains a retroreflective material designed to reflect incident electromagnetic radiation in a concentrated cone surrounding the axes of incidence, said method comprising:

irradiating the zone with electromagnetic radiation by a source having a predetermined location with respect to the zone, thereby establishing a known axis of incidence for the radiation from the source;

sensing the zone for electromagnetic radiation which is reflected off of objects within the zone;

locating the sensing means adjacent the known axis of incidence from the irradiation source, thus receiving radiation originating from the irradiation source and reflected by the retroreflective material;

extracting information about the object from the radiation reflected from the zone, characterized by dividing the reflected radiation thus sensed into a network of individual segments and identifying a separate location for each segment;

measuring the magnitude of the electromagnetic radiation present within each segment;

selecting only those segments of the zone having a magnitude for the electromagnetic radiation above a predetermined value which value is a typical maximum for diffuse reflection, thus eliminating from consideration diffusely reflected radiation; and

determining at least one target area consisting of adjacent selected segments, while eliminating from consideration all areas of the zone not within the target area, thereby eliminating from consideration radiation which is reflected from areas within the zone not defined by the retroreflective material.

According to a feature of a further aspect of this invention there is provided an apparatus for sensing and identifying an object within an interrogation zone, which object includes a retroreflective material for reflecting incident electromagnetic radiation in a concentrated cone surrounding the axes of incidence, said apparatus comprising:

means for irradiating the zone with electromagnetic radiation by a source having a predetermined location with respect to the zone, thereby establishing a known axis of incidence for the radiation from the source,

sensing means for sensing the zone for electromagnetic radiation which is reflected off of objects within the zone, said sensing means being located adjacent the known axis of incidence from the irradiation source, to thereby receive radiation originating from the irradiation source and reflected by the retroreflected material,

selecting means arranged to sense radiation that is reflected by the retroreflective material, and

means for extracting information from the object having the retroreflective material,

characterized in that said object has an unknown position and orientation within said interrogation zone, said source produces an interrogation zone which is larger than said retroreflective material on said object and is arranged to irradiate the entirety of said zone at one time, said sensing means senses the entirety of said zone at one time, and the selecting means is arranged to locate the object within said interrogation zone from the entirety of said sensed radiation.

According to another feature of said further aspect of this invention there is provided an apparatus for sensing and extracting information about an object within a large interrogation zone, which object includes a retroreflective material designed to reflect incident electromagnetic radiation in a concentrated cone surrounding the axes of incidence, said apparatus comprising:

means for irradiating the zone having a predetermined location with respect to the zone, thereby establishing a known axis of incidence for radiation from the irradiation means to the zone,

means for sensing radiation which is reflected off objects located within the zone, including adetector located adjacent said axis of incidence for said irradiation means and thereby positioned to optimally receive retroreflected radiation from said retroreflective material, and

means for extracting information from the radiation being sensed from said retroreflective material, characterized by

means for dividing the radiation sensed into a network of individual segments and for identifying a separate location for each segment,

means for measuring the magnitude of the electromagnetic radiation present within each of said segments, and

means for selecting only those segments of the zone having a magnitude for the electromagnetic radiation sensed above a predetermined value which is typical of diffuse reflection, thereby tending to eliminate radiation which is reflected from areas within the zone not defined by the retroreflective material.

To further ensure that only the radiation which has originated from the source and then been retroreflected by the retroreflective material is ultimately considered, preferably the reflected radiation sensed is divided into a network of individual segments, and a relative location with respect to the zone is determined for each of these segments. The magnitude of electromagnetic radiation present within each of the segments is also measured. Segments consisting of radiation reflected by the retroreflective material generally have a greater magnitude of reflected radiation than those segments made up of light diffusely reflected from other areas within the zone. Therefore, those segments having a magnitude for the electromagnetic radiation above a value which is typical of diffuse reflection can be selected, with the remainder of the segments eliminated from consideration. This tends to further eliminate from consideration areas of the zone not defined by the retroreflective material. Specularly reflected radiation may also be present within the zone, however the occurrence of such specular reflection toward the sensing means is rare and usually not a problem. Even this specular reflection can be eliminated from consideration by determining the configuration formed by the selected (i.e. by their magnitude) segments which are adjacent other selected segments. The configurations formed by the adjacent selected segments is compared to the known configuration of the retroreflective material. When a substantially equivalent configuration is found, it can be considered a target area representing the retroreflective material and denoting the location of the information.

Once the location of the object is found within the zone, it is possible through a variety of techniques to extract the desired information from the object or from the retroreflective material incorporated on the object. In the former case standard techniques can be utilized to process the radiation passing from the source to the object, and eventually to the sensing means. In the latter case the information is typically extracted from the retroreflective material by looking for configurations of adjacent selected segments having essentially the same magnitude and comparing these equal magnitude configurations to a plurality of stored configurations, having known identities and representing, for example, the various letters of the alphabet. The equal magnitude configurations representing the information can thereby be identified based upon their substantial equivalence to the stored configurations.

## Description of the Drawings

The invention will be further described hereinafter with reference to the accompanying figures wherein like numbers refer to like parts in the separate views and wherein:

Figure 1 is a pictorial representation of the method and apparatus according to the present invention;

Figure 2 is an enlarged fragmentary sectional view of retroreflective material used in the method according to Figure 1; and

Figure 3 is a typical block diagram for the radiation analyzer and associated microcomputer as included by the present invention.

## Detailed Description of the Preferred Embodiment

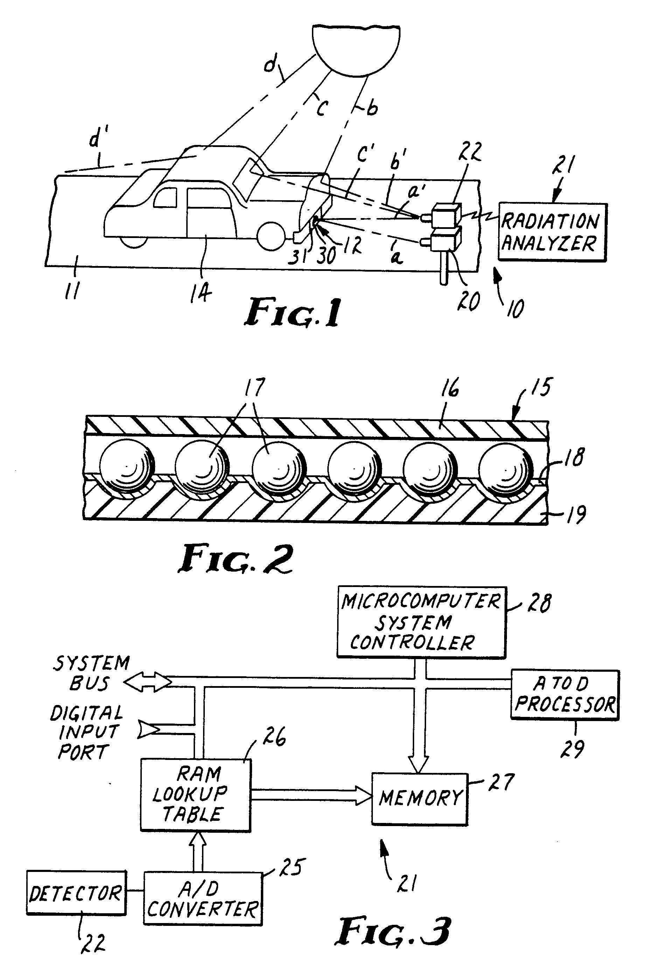

The apparatus 10 according to the present invention is illustrated in Figure 1 as it applies to one particular field of use. As will become apparent, the technology disclosed herein has utility in other fields than that shown. Therefore, this illustration is not to be considered limiting. As is illustrated, the apparatus 10 is utilized for sensing and identifying information contained on a license plate 12 of a vehicle 14. This vehicle 14 is typically being driven anywhere from zero to 70 miles per hour (0 to 113 km/hr) within a lane of traffic. Considering the speed of the vehicle and the possibility of interference by other vehicles, the importance of having a system which can identify the information within a minimum response time can be appreciated. It is also apparent that the location and orientation of the license plate 12 upon the vehicle 14 as well as the location of the vehicle 14 within the lane 11 is quite variable. Hence, the location and orientation of the object and the information contained thereon is undefined and must therefore be located before any information can be extracted. The object is located through the use of a sheet of retroreflective material 15 as a type of target to identify the object and thereby allow the apparatus of the present invention to zero in on the information as the vehicle 14 passes through, or is stopped within an interrogation zone formed within a predetermined length or distance of the traffic lane or road. Since retroreflective material 15 is already commonly utilized in the manufacture of license plates 12, the adaptability of the present invention in this particular field is greatly facilitated.

For an understanding of how the method of the present invention is accomplished, reference is made to Figure 2 wherein a section of retroreflective material is illustrated. Reflex reflection or retroreflection is a well-known concept which refers to the ability of a material to return a large percentage of the incident radiation back toward its source even though the incident rays have struck the material at an angle other than 90 degrees. The angular difference between the incident radiation and the retroreflected radiation is therefore quite small. The optimal location therefore, to sense the presence of any retroreflected radiation is at a position adjacent the axis of incidence for the incident radiation. Material capable of retroreflection are well known and commercially available. Examples of materials capable of retroflection are described in US—A—2,407,680 and US—A—3,190,178. The disclosures of these patents are incorporated herein by reference. Typically a retroreflective material 15 includes a transparent cover film 16, a layer of very small transparent glass beads (for example, microspheres) 17 spaced slightly below the film 16 leaving an air space therebetween, an underlying reflective means 18, and a binder layer 19. The microspheres 17 typically have a refractive index substantially higher than the air, or any other substance with which the protruding portions of the microspheres 17 interface, thus affording the microspheres 17 function as convex lens elements which approximately focus incident radiation on the reflective means 18. The glass beads 17 in combination with the back reflector 18 cause the characteristic retroreflection of the incident radiation passing through the microspheres 17. Depending upon the specific design characteristics of the retroreflective material, the present invention can be made to operate beyond the range of frequencies associated with visible light as well as within the visible light frequency range. Cube corner retroreflective elements instead of, or together with glass microspheres may also be used in the retroreflective material.

To further clarify the operation of the present invention retroreflection must be distinguished from the two other types of reflection which are encountered. Specular reflection is the type of reflection typified by reflection from a mirror. With specular reflection the angle of incidence of the radiation with the reflecting surface is equal to, but opposite from the angle of reflection. Hence radiation from a source having a large angle of incidence within respect to the object being irradiated, will have an equally large angle of reflection, and unless the angle of incidence is close to 90°, the specularly reflected radiation is typically directed away from the source. Diffuse reflection, on the other hand, generally occurs when radiation is incident on an irregular surface. With diffuse reflection the incident radiation is reflected more or less equally in all directions.

The present invention utilizes the properties of the retroreflective material 15 to eliminate all areas within the zone from consideration, except the area defined by the retroreflective material 15, i.e. the license plate 12. This is done by placing an irradiation source 20 at a fixed location with respect to the zone. The radiation originating from the source 20 will thus pass toward the zone along a known axis of incidence. The irradiation source 20 emits radiation at a frequency within the known design range of the retroreflective material 15. It is also of a sufficient power to produce retroreflected radiation from the retroreflective material 15 having a magnitude greater than any diffusely reflected radiation originating from the source 20 or other sources and reflected off other areas within the zone not defined by the retroreflective material. It has been found that a source of approximately 1.6 × 106 candelas is desirable when using a system designed for operation with visible light. Such a source is obtained by utilizing four standard Tungsten/Halogen spot lamps, such as those which are commercially available from Sylvania under the model designation FFN. It is possible to enlarge the interrogation zone through the use of more concentrated light sources such as available coherent light sources. These coherent light sources also offer other advantages. It is also possible to use a strobed source such as a Xenon strobe, in which case, the timing of the strobe can be used to further eliminate from consideration specularly reflected radiation within the zone originating from other sources (for example the sun). This elimination is possible because of the non-repetitive and point source nature of specular reflected radiation as will be discussed.

The radiation reflected (see Figure 1), off of the objects located within the zone is sensed by means including a detector 22. Typically, this detector 22 is a standard television camera which is located adjacent the axis of incidence 21 for the radiation originating from the irradiation source 20, although faster response time can be achieved with photo-detection cells or similar radiation sensing means. As previously explained, this location optimizes the detection of radiation which has originated from the irradiation source 20 and which is retroreflected toward the detector 22 by the retroreflective material 15 (see e.g. ray a—a'). It is also possible however, that the detector 22 will receive radiation which is specularly and diffusely reflected from other areas within the zone, such as chrome bumpers, curved body parts, or glass windows. Diffusely reflected radiation, exemplified by ray b—b' within Figure 1, can be distinguished from retroreflected radiation by comparing its magnitude to the predicted from known magnitude of radiation originating from the source 20 and retroreflected by the retroreflective material 15. For example, a typical value for maximum solar illumination is 13,000 foot candles (approximately 139 900 Lux). If this solar illumination is incident on a perfect white diffuse reflector having a surface area of one square foot (approximately 0.09 square meters) (e.g., one having a luminous efficiency of 0.3 candle power/foot candle/foot squared (3.23 Lux), the resulting illuminance will be approximately 4,000 candle power (43 040cd/m$^2$). A typical value for the luminous efficiency of retroreflective material is 50 candle power/foot candle/foot squared (538 Lux). Utilizing a source that produces an illumination of 1.6 × 106 candelas, and placing the source at a distance of approximately 100 ft (30.5 meters) from the retroreflective material (also having a surface area of one square foot) results in an illuminance for the reflected ray of approximately 8000 candle power (86 080cd/m$^2$). This value is twice that of the diffusely reflected light from the white diffuse reflector. An even greater difference is observed with radiation diffusely reflected from typical painted vehicle surfaces, or when the radiation diffusely reflected has originated from the irradiation source 20 instead of the sun.

Specular reflection (exemplified by rays c—c' and d—d' within Figure 1) cannot generally be distinguished by a comparison of its illuminance magnitude, since when specular reflection occurs from a very bright source, it has a comparable magnitude to the retroreflected radiation. However, since the angle of incidence and the angle of reflection for specularly reflected radiation must be the same, there are relatively few locations for a source of the specularly reflected radiation which will result in the radiation being specularly reflected toward the detector 22. Since the vehicle 14 is usually moving, resulting in a continuously changing orientation between the source of the radiation and the specular reflector, any specular reflection actually reaching the detector 22 is of a relatively short duration and generally non-repetitive, and has the appearance of a single ray, e.g. as if its source were a single point. The present invention is able to use these characteristics to eliminate from consideration any specularly reflected radiation within the zone, and thereby isolate the retroreflective material or target area. For this purpose a radiation analyzer such as a video analyzer 21, which in the preferred embodiment is the model 2000 video-analyzer, commercially available from OCTEK, INC., of Burlington, Massachusetts, is utilized. This instrument analyzes the image of the reflected radiation sensed by the television camera (detector 22) by first dividing that image into an array or network of segments or picture elements (pixels). A value for the illuminance or magnitude of the reflected radiation present within each of the individual segments or within a representative sampling of the individual segments, is determined. This value, along with a location for each particular segment is stored in a memory associated with the video analyzer 21.

Referring now to Figure 3, this process can be traced according to a simplified block diagram of the circuitry involved. A television camera or detector 22 is illustrated connected to an analog to digital converter 25. The camera 22 provides a standard video signal to the converter 25 from which the magnitude of illuminance within each of the various picture elements comprising the radiation reflected from objects within the interrogation zone, as well as a reference for the location of each of the picture elements (pixels) can be determined. The converter 25 assigns a discrete value for the magnitude of the illuminance within each of these pixels, and a discrete location code for that pixel. These values are applied to a high speed random access memory (RAM) lookup table 26 which associates the respective location code with the magnitude value for that pixel. This matched or associated information is then stored within a memory 27. The OCTEK system is designed to be utilized with a microcomputer 28 which can access both the memory 27 and the RAM lookup table 26. Once the information is stored within the memory 27, it is possible with the aid of the micro-computer 28 to further process the information by selecting segments of the zone having a magnitude for the electromagnetic radiation which is above a predetermined value, typically the saturation level of the camera. This level is however adjustable by varying the camera's optics, and a value can be chosen which is greater than the typical magnitude for any diffusely reflected radiation which is present. The micro-computer 28 searches the memory 27 for selected segments which by referring to the location codes, are adjacent other selected segments. These groups of adjacent selected segments are the target area(s) within the zone which will be further considered. All other segments and accordingly areas within the zone are eliminated from consideration as containing radiation which has been diffusely reflected from non-target, non-retroreflective defined areas. In practice the target areas which remain in the memory 27 therefore consist of radiation retroreflected from those areas of the zone defined by the retroreflective material 15.

The present invention provides an additional assurance however that any specularly reflected radiation will also be eliminated from consideration. This is done by further manipulating the data stored within the memory 27 to determined the configurations which are formed by the adjacent selected segments making up the target areas. The shapes of these formed configurations are compared to the expected shape of a license plate 14. This is done in the preferred embodiment by measuring a dimension such as the length, or a ratio of two dimensions, of the formed configurations with the comparable known dimension, or ratio of two dimensions, for the license plate 14. Those formed configurations for which this comparison does not result in substantial equality are rejected as being made up of radiation from other sources than that retroreflected by the retroreflective license plate. Those formed configurations wherein the comparison results in substantial equality are thus selected as representing the license plate and further processed to identify the information contained therein. It is also possible to eliminate specularly reflected radiation originating from other sources by sensing the zone for radiation at a time when the source 20 is energized and also at a time which the source 20 is de-energized. If this is done instantaneously, the specular reflection of radiation from other sources would be present in both cases, while the radiation from the source 20 is only present in the former case. Hence the reflected radiation sensed in both cases can be subtracted by the micro-computer 28, leaving only the radiation due to the source 20 which is typically retroreflected radiation. In this manner a single license plate, as defined by the retroreflective material, can be located within the large field in a minimal amount of time, and with a minimal amount of processing.

Once the license plate is located, the apparatus can also be used to determine such information as the speed of the vehicle bearing the license plate. There are multiple techniques by which the speed can be calculated once an original location for the vehicle has been determined and identified. For example, the Doppler phase shift occurring between the source radiation and the retroreflected radiation can be measured and used to determine the speed of the vehicle. Although other radar systems use the Doppler effect, the present invention has the advantage of being used with visable or near visable radiation (i.e. ultra-violet, visable light, infra-red). Due to the omnipresence of this radiation in the environment, it is virtually impossible to design a detector that would be able to alert a speeding driver of a vehicle whose speed is being measured, in an adequate time for the driver to decrease speed, and thus escape detection. These routines can be performed by conventional analog and digital circuitry 29, on the signal from the sensor 22, and controlled by the microcomputer 28.

Other methods of calculating the speed of the object are also available with the present invention. For example the time taken for the radiation to travel from the source to the retroreflector and back to the sensor, can be determined. Since the speed of the radiation is known, the distance between the retroreflector and the source can be determined by multiplying the speed of the radiation to complete the trip between the source and the sensor. This same determination can be made at some pre-determined later time. The first distance is then substracted from the second distance, with this change in distance divided by the pre-determined time between the measurements. The resultant quotient is equivalent to the speed of the vehicle. All of these measurements and calculations can be made in less than 1 second. Alternatively, the intensity of the radiation from the source and the intensity of the radiation returning to the sensor from the retroreflective material can be determined. The resulting reduction in the intensity of the radiation can be compared to the predicted relationship between the intensity of the radiation and the distance travelled by the radiation. These calculations again determine the distance of the retroreflective material froum the source. If these calculations are repeated after a pre-determined delay, with the change in distance divided by the delay in time between the measurements, the speed of the vehicle is determined. In all of the methods described above the determinations made can be repeated a number of times and then averaged to ensure accuracy in the determined speed of the vehicle.

In the case of license plates there is also information contained therein, i.e. the desired alphabetic and numeric character, which is usually embossed in the retroreflective material and otherwise defined by printing with contrasting inks. Other standard techniques are also useable for incorporating the information into the license plates. In the preferred embodiment identification of the information contained within the license plate or target area can be extracted by a standard character recognition technique known as "template matching." Other techniques are also available, however, and may work equally well. With the template matching technique, the formed configurations consisting of adjacent picture elements or segments isolated by the method described above, are further manipulated to look for configurations of adjacent segments which have an approximately equal magnitude. These equal magnitude formed configurations are compared by the computer 28 to a plurality of configurations stored in the computer memory 27 having known identities based upon the known relationship between the magnitude and location of the elements from which they are composed. For this reason, this technique has been given the name "template matching." The configurations which are determined equivalent to the known configurations are identified based upon the adoption of the identity of the known configurations. For example, each of the standard alphabetic and numeric characters can be described numerically by dividing their configuration into incremental elements or segments and associating a magnitude value (e.g., grey-scale value) and a location value for each of these incremental elements. It is this matrix of numbers which is stored in the memory 27 as the known configuration for each of the characters. Typically, a license plate 12 contains some combination of alphabetic and numeric characters 30, accentuated by a contrasting color from the background 31 of the plate 12. The contrasting color will result in a difference in the magnitude of retroreflected radiation sensed as reflected from the various areas the license plate 12 due to a partial or full blockage of the retroreflected material 15 by the ink causing the contrasting colors. Each of the given characters 30 therefore will reflect radiation with all the segments therein having an approximately equal magnitude. Similarly the spaces between the characters and the voids within the character 30 themselves will reflect radiation having a different magnitude which generally corresponds to the background 31. Each of the characters 30 can therefore be extracted from the background 31 and its configuration can be compared to the matrix of numbers for the known characters. Based upon this comparison the extracted characters 30 can be identified. Once an identification has been made, standard computer techniques can be used to make a record of all license numbers passing a given point or the license numbers can be compared to table of license plate numbers, e.g., for stolen cars, which is also contained in the computer memory 27.

In addition to processing this information on locations, it is also possible to interconnect this system to other computers or monitors through a system bus. It would thus be possible to store license plate numbers from various check points at a single location. Among other benefits this capability would be of great utility to law enforcement agencies. The system also contains an input port which can be used to program the system as well as communicate through the system bus.

Having thus described a preferred embodiment of the present invention it will be understood that changes may be made in the size, shape, or configuration of some of the parts without departing from the present invention as described in the appended claims. It will also be understood that instead of a license plate, retroreflective material can be used as a target area denoting such things as the address location on a letter or parcel, or the destination tag on luggage. When this is done, the present invention can be utilized to identify the location or destination for these items.

**Claims**

1. A method of sensing and identifying an object within an interrogation zone comprising:
    incorporating on the object (14) a retroreflective material (15) designed to reflect incident electromagnetic radiation in a concentrated cone surrounding the axes of incidence;
    irradiating the zone with electromagnetic radiation by a source (20) having a predetermined location with respect to the zone, thereby establishing a known axis of incidence for the radiation from the source;
    sensing by a sensing means (22) the zone for electromagnetic radiation which is reflected off of objects within the zone;
    locating the sensing means (22) adjacent the known axis of incidence from the irradiation source (20), thus receiving radiation originating from the irradiation source and reflected by the retroreflective material, but tending to eliminate radiation from radiation sources which is specularly reflected by areas within the zone;
    selecting (26, 27, 28) sensed radiation that is reflected by the retroreflective material; and
    extracting information from the object having the retroreflective material,
    characterized in that said object has an unknown position and orientation within said interrogation zone; said interrogation zone is larger than said retroreflective material on said object; said irradiating comprises irradiating the entirety of said zone at one time; said sensing comprises sensing the entirety of said interrogation zone at one time; and radiation is selected from the entirety of said sensed radiation to locate said object within said interrogation zone.

2. The method according to claim 1, wherein said selection of sensed radiation is further characterized by:

dividing the reflected radiation thus sensed into a network of individual segments and identifying a separate location for each segment;

measuring the magnitude of the electromagnetic radiation present within each segment;

selecting only those segments of the zone having a magnitude for the electromagnetic radiation above a predetermined value which value is a typical maximum for diffuse reflection;

determining at least one target area consisting of adjacent selected segments, while eliminating from consideration all areas of the zone not within a target area, thereby eliminating from consideration radiation which is reflected from areas within the zone not defined by the retroreflective material.

3. A method of machine sensing and identifying of information about an object (14) having an unknown position and orientation within a large interrogation zone, which object contains a retroreflective material (15) designed to reflect incident electromagnetic radiation in a concentrated cone surrounding the axes of incidence, said method comprising:

irradiating the zone with electromagnetic radiation by a source (20) having a predetermined location with respect to the zone, thereby establishing a known axis of incidence for the radiation from the source;

sensing (22) the zone for electrmagnetic radiation which is reflected off of objects within the zone;

locating the sensing means (22) adjacent the known axis of incidence from the irradiation source, thus receiving radiation originating from the irradiation source and reflected by the retroreflective material;

extracting (29) information about the object from the radiation reflected from the zone characterized by

dividing the reflected radiation thus sensed into a network of individual segments and identifying a separate location for each segment;

measuring the magnitude of the electromagnetic radiation present within each segment;

selecting only those segments of the zone having a magnitude for the electromagnetic radiation above a predetermined value which value is a typical maximum for diffuse reflection, thus eliminating from consideration diffusely reflected radiation, and

determining at least one target area consisting of adjacent selected segments, while eliminating from consideration all areas of the zone not within the target area, thereby eliminating from consideration radiation which is reflected from areas within the zone not defined by the retroreflective material.

4. The method according to claim 1 or 3 wherein said extraction of information is further characterized by:

determining the intensity of the radiation from the source,

determining the intensity of the radiation reflected from the retroreflective material,

determining the reduction in intensity of the retroreflective radiation compared to the source radiation,

comparing said determined reduction in intensity to a predicted relationship between radiation intensity and distance travelled by the radiation thereby determining the distance of the retroreflected material from the source,

repeating, after a pre-determined time delay, said determination of the intensity of the radiation from the source and the retroreflective material, said determination of the reduction in intensity, and said comparison of the determined reduction to the predicted relationship between intensity reduction and distance, thereby determining a second distance of the retroreflective material from the source,

determining the change between the first and second distance of the retroreflective material from the source, and

dividing said determined change by the predetermined delay, thereby determining the velocity of the object having the retroreflective material.

5. The method according to claim 1 or 3 wherein said extraction of information is further characterized by:

determining the time taken for the radiation to travel from the source (20) to the retroreflective material (15) and then to the sensing means (22),

multiplying said determined time by the known velocity of the radiation, thereby determining the distance between the retroreflective material and the source,

repeating said determinations after a predetermined time delay, and

dividing the resulting change in distance by the time delay to determine the speed of the object.

6. The method according to claim 2 or 3 wherein said extraction of information is further characterized by:

isolating configurations formed by adjacent selected segments which have an approximately equal magnitude of electromagnetic radiation;

comparing each of the isolated configurations to a plurality of known configurations having a known identity and consisting of segments having a known relationship between their magnitudes of electromagnetic radiation and locations;

selecting only those isolated configurations wherein said comparison reveals a substantial equivalence to the known configurations; and

identifying those isolated configurations determined substantially equivalent to the known configurations, based upon the identity of the known configurations.

7. The method according to claim 1, further characterized in that:

said selecting of said sensed radiation is based on a determination that said sensed radiation has a magnitude greater than a predetermined value which is typical for diffuse reflection, thereby locating the retroreflective material and the object; and

in that method further comprises processing said selected radiation after said selecting and locating operations are completed to extract information from the object having the retroreflective material, said processing being distinct in time and kind from said selecting and locating.

8. The method according to any preceding claim, further characterized in that:

said irradiating is performed with electromagnetic radiation which is beyond the range of frequencies associated with visible light.

9. An apparatus for sensing and identifying an object (14) within an interrogation zone, which object includes a retroreflective material (15) for reflecting incident electromagnetic radiation in a concentrated cone surrounding the axes of incidence, said apparatus comprising:

means (20) for irradiating the zone with electromagnetic radiation by a source (20) having a predetermined location with respect to the zone, thereby establishing a known axis of incidence for the radiation from the source,

sensing means (22) for sensing the zone for electromagnetic radiation which is reflected off of objects within the zone, said sensing means being located adjacent the known axis of incidence from the irradiation source (20), to thereby receive radiation originating from the irradiation source and reflected by the retroreflected material,

selecting means (26, 27, 28) arranged to sense radiation that is reflected by the retroreflective material, and

means (29) for extracting information from the object having the retroreflective material,

characterized in that said object has an unknown position and orientation within said interrogation zone, said source (20) produces an interrogation zone which is larger than said retroreflective material on said object and is arranged to irradiate the entirety of said zone at one time, said sensing means (22) senses the entirety of said interrogation zone at one time, and the selecting means (26, 27, 28) is arranged to locate the object within said interrogation zone from the entirety of said sensed radiation.

10. An apparatus for sensing and extracting information about an object (14) within a large interrogation zone, which object includes a retroreflective material (15) designed to reflect incident electromagnetic radiation in a concentrated cone surrounding the axes of incidence, said apparatus comprising:

means (20) for irradiating the zone having a predetermined location with respect to the zone, thereby establishing a known axis of incidence for radiation from the irradiation means to the zone,

means (22) for sensing radiation which is reflected off objects located within the zone, including a detector located adjacent said axis of incidence for said irradiation means and thereby positioned to optimally receive retroreflected radiation from said retroreflective material, and

means (29) for extracting information from the radiation being sensed from said retroreflective material, characterized by

means for dividing the radiation sensed into a network of individual segments and for identifying a separate location for each segment,

means for measuring the magnitude of the electromagnetic radiation present within each of said segments, and

means (26, 27, 28) for selecting only those segments of the zone having a magnitude for the electromagnetic radiation sensed above a predetermined value which is typical of diffuse reflection, thereby tending to eliminate radiation which is reflected from areas within the zone not defined by the retroreflective material.

11. The apparatus according to claim 10 wherein said means for extracting information is further characterized by an electrical circuit for determining the velocity of the object, said circuit including an analog to digital processor (29).

12. The apparatus according to claim 10 wherein said means for extracting information is further characterized by

means for isolating configurations formed by adjacent selected segments which have an approximately equal magnitude of electromagnetic radiation;

means for comparing each of the isolated configurations to a plurality of known configurations having a known identity and consisting of segments having a known relationship between their magnitudes and their locations, and

means for identifying the isolated configurations based upon the identity of the known configurations.

**Patentansprüche**

1. Verfahren zum Entdecken und Identifizieren eines Gegenstandes in einer Kontrollzone, in dem auf dem Gegenstand (14) ein rückstrahlendes Material (15) vorgesehen wird, das geeignet ist, einfallende elektromagnetische Strahlung in einer die Einfallsachse umgebenden, konzentrierten Zone zu reflektieren;

die Zone mit elektromagnetischer Strahlung von einer Quelle (20) aus zu bestrahlt wird, die sich gegenüber der Zone in einer vorherbestimmten Lage befindet, in der die Quelle für die von der Quelle kommende Strahlung eine bekannte Einfallsachse bestimmt;

mittels einer Sensoreinrichtung (22) die Zone zum Nachweis von elektromagnetischer Strahlung erfaßt wird, die von Gegenständen in der Zone reflektiert wird;

die Sensoreinrichtung (22) im Bereich der von der Bestrahlungsquelle (20) ausgehenden, bekannten Einfallsachse angeordnet ist, so daß die Sensoreinrichtung Strahlung empfängt, die von der Bestrahlungsquelle kommt und von dem rückstrahlenden Material reflektiert wird, wobei die Sensoreinrichtung dazu neigt, Strahlung auszuscheiden, die von Strahlungsquellen kommt und von Flächen innerhalb der Zone spiegelnd reflektiert wird;

erfaßte Strahlung, die von dem rückstrahlenden Material reflektiert wird, ausgewählt (26, 27, 28) wird; und

von dem mit dem rückstrahlenden Material versehenen Gegenstand Information gewonnen wird,

dadurch gekennzeichnet, daß der Gegenstand in der Kontrollzone eine unbekannte Lage und Orientierung einnimmt; daß die Kontrolzone größer ist als das rückstrahlende Material auf dem Gegenstand; daß bei der Bestrahlung die ganze Zone gleichzeitig bestrahlt wird; daß bei der Erfassung die ganze Kontrollzone gleichzeitig erfaßt wird und daß zur Bestimmung des Ortes des Gegenstandes in der Kontrollzone Strahlung von der ganzen erfaßten Strahlung ausgewählt wird.

2. Verfahren nach Anspruch 1, dadurch gekennzeichnet, daß zur Auswahl der nachgewiesenen Strahlung

die nachgewiesene Strahlung in ein Netzwerk von einzelnen Segmenten unterteilt und für die Segmente je ein eigener Ort bestimmt wird;

die Stärke der elektromagnetischen Strahlung in jedem Segment gemessen wird;

nur jene Segmente der Zone ausgewählt werden, in denen die Stärke der elektromagnetischen Strahlung über einem vorherbestimmten Wert liegt, der ein typisches Maximum für diffuse Reflexion ist;

mindestens ein Zielbereich bestimmt wird, der aus einander benachbarten asugewählten Segmenten besteht, und alle Bereiche der Zone unberücksichtigt gelassen werden, die nicht in einem Zielbereich liegen, so daß Strahlung, die von Bereichen innerhalb der Zone reflektiert wird, die nicht von dem rückstrahlenden Material bestimmt werden, unberücksichtigt bleibt.

3. Verfahren zum maschinellen Erfassen und Identifizieren von Information über einen Gegenstand (14), der in einer großen Kontrollzone eine unbekannte Lage und Orientierung einnimmt und der ein rückstrahlendes Material (15) enthält, das geeignet ist, einfallende elektromagnetische Strahlung in einer die Einfallsachse umgebenden, konzentrierten Zone zu reflektieren, wobei in dem Verfahren

die Zone mit elektromagnetischer Strahlung von einer Quelle (20) aus bestrahlt wird, die sich gegenüber der Zone in einer vorherbestimmten Lage befindet, in der die Quelle für die von der Quelle kommende Strahlung eine bekannte Einfallsachse bestimmt;

mittels einer Sensoreinrichtung (22) die Zone zum Nachweis von elektromagnetischer Strahlung erfaßt wird, die von Gegenständen in der Zone reflektiert wird;

die Sensoreinrichtung (22) im Bereich der von der Bestrahlungsquelle (20) ausgehenden, bekannten Einfallsachse angeordnet ist, so daß die Sensoreinrichtung Strahlung empfängt, die von der Bestrahlungsquelle kommt und von dem rückstrahlenden Material reflektiert wird;

aus der von er genannten Zone reflektierten Strahlung Information über den Gegenstand gewonnen (29) wird, dadurch gekennzeichnet, daß die nachgewiesene Strahlung in ein Netzwerk von einzelnen Segmenten unterteilt und für die Segmente je ein eigener Ort bestimmt wird;

die Stärke der elektromagnetischen Strahlung in jedem Segment gemessen wird;

nur jene Segmente der Zone ausgewählt werden, in denen die Stärke der elektromagnetischen Strahlung über einem vorherbestimmten Wert liegt, der ein typisches Maximum für diffuse Reflexion ist, während diffus reflektierte Strahlung unberücksichtigt bleibt; und

mindestens ein Zielbereich bestimmt wird, der aus einander benachbarten ausgewählten Segmenten besteht, und alle Bereiche der Zone unberüucksichtigt gelassen werden, die nicht in einem Zielbereich liegen, so daß Strahlung, die von Bereichen innerhalb der Zone reflektiert wird, die nicht von dem rückstrahlenden Material bestimmt werden, unberücksichtigt bleibt.

4. Verfahren nach Anspruch 1 oder 3, dadurch gekennzeichnet, daß zum Gewinnen von Information

die Intensität der von der Quelle kommenden Strahlung festgestellt wird,

die Verminderung der Intensität der rückgestrahlten Strahlung gegenüber der von der Quelle kommenden Strahlung festgestellt wird,

die gestgestellte Verminderung der Strahlung mit die einer vorgegebenen Beziehung zwischen der Strahlungsintensität und dem von der Strahlung zurückgelegten Weg und dadurch der Abstand des rückstrahlenden Materials von der Quelle festgestellt wird;

nach einer vorherbestimmten Verzögerungszeit die Feststellung der Intensität der von der Quelle bzw. von dem rückstrahlenden Material kommenden Strahlung, die Feststellung der Verminderung der Intensität und der Vergleich der festgestellten Verminderung mit der vorgegebenen Beziehung zwischen der Intensitätsverminderung und dem Weg wiederholt und dadurch ein zweiter Abstand des rückstrahlenden Materials von der Quelle festgestellt wird;

der Unterschied zwischen dem ersten und dem zweiten Abstand des rückstrahlenden Materials von der Quelle festgestellt wird; und

der festgestellte Unterschied durch die vorherbestimmte Verzögerungszeit geteilt und dadurch die Geschwindigkeit des mit dem rückstrahlenden Material versehenen Gegenstandes bestimmt wird.

5. Verfahren nach Anspruch 1 oder 3, dadurch gekennzeichnet, daß zum Gewinnen von Information

die Laufzeit der Strahlung von der Quelle (20) zu dem rückstrahlenden Material (15) und von dort zu der Sensoreinrichtung (22) festgestellt wird;

die so festgestellte Zeit mit der bekannten Geschwindigkeit der Strahlung multipliziert und dadurch der Abstand zwischen dem rückstrahlenden Material und der Quelle festgestellt wird;

diese Feststellungen nach einer vorherbestimmten Verzögerungszeit wiederholt werden; und

die so festgestellte Veränderung des Abstandes durch die Verzögerungszeit geteilt und dadurch die Geschwindigkeit des Gegenstandes festgestellt wird.

6. Verfahren nach Anspruch 2 oder 3, dadurch gekennzeichnet, daß zum Gewinnen der Information

Konfigurationen getrennt erfaßt werden, die von einander benachbarten ausgewählten Segmenten gebildet werden, in denen die elektromagnetische Strahlung ungefähr dieselbe Stärke hat;

jede der getrennt erfaßten Konfigurationen mit einer Mehrzahl von bekannten Konfigurationen verglichen wird; die eine bekannte Identität haben und aus Segmenten bestehen, für die die Beziehung zwischen der Stärke der elektromagnetischen Strahlung und dem Ort bekannt ist;

nur jene getrennt erfaßten Konfigurationen ausgewählt werden, für die der Vergleich ergibt, daß sie den bekannten Konfigurationen im wesentlichen entsprechen; und

auf Grund der Identität der bekannten Konfigurationen jene getrennt erfaßten Konfigurationen identifiziert werden, für die festgestellt worden ist, daß sie den bekannten Konfigurationen im wesentlichen entsprechen.

7. Verfahren nach Anspruch 1, dadurch gekennzeichnet, daß

die Auswahl der erfaten Strahlung auf und einer Feststellung erfolgt, daß die Stärke der erfaßten Strahlung größer ist als ein vorherbestimmter Wert, der für diffuse Strahlung typisch ist, und dadurch die Lage des rückstrahlenden Materials und des Gegenstandes bestimmt wird; und

in dem Verfahren nach der vollständioen Durchführung der Auswahl- und Lagebestimmungsvorganges die ausgewählte Strahlung derart verarbeitet wird, daß von dem mit dem rückstrahlenden Material versehenen Gegenstand Information gewonnen wird, wobei diese Verarbeitung sich hinsichtlich der Zeit und der Art von der Auswahl und der Lagebestimmung unterscheidet.

8. Verfahren nach einem der vorhergehenden Ansprüche, dadurch gekennzeichnet, daß die Bestrahlung mit elektromagnetischer Strahlung außerhalb des dem sichtbaren Licht zugeordneten Frequenzbereiches erfolgt.

9. Vorrichtung zum Entdecken und Identifizieren eines in einer Kontrollzone befindlichen Gegenstandes (14), der ein rückstrahlendes Material (15) zum Reflektieren von elektromagnetischer Strahlung in einer die Einfallsachse umgebenden, konzentrierten Zone besitzt, wobei die Vorrichtung umfaßt:

eine Einrichtung (20) zum Bestrahlen der Zone mit elektromagnetischer Strahlung von einer Quelle (20), die sich gegenüber der Zone in einer vorherbestimmten Lage besitzt, in der die Quelle für die von der Quelle kommende Strahlung eine bekannte Einfallsachse bestimmt;

eine Sensoreinrichtung (22) zum Erfassen von in der Zone vorhandener elektromagnetischer Strahlung, die von Gegenständen in der Zone reflektiert wuird, wobei die Sensoreinrichtung im Bereich der von der Bestrahlungsquelle (20) ausgehenden Einfallsachse angeordnet ist und daher Strahlung empfängt, die von der Bestrahlungsquelle kommt und von dem rückstrahlenden Material reflektiert wird;

eine Auswähleinrichtung (26, 27, 2B), die so eingerichtet ist, daß sie von dem rückstrahlenden Material reflektierte Strahlung erfaßt; und

eine Einrichtung (29) zum Gewinnen von Information von dem mit dem rückstrahlenden Material versehenen Gegenstand;

dadurch gekennzeichnet, daß der Gegenstand in der Kontrollzone eine unbekannte Lage und Orientierung einnimmt, daß die Quelle (20) eine Kontrollzone bestimmt, die größer ist als das rückstrahlende Material auf dem Gegenstand, und die Quelle so eingerichtet ist, daß sie die ganze genannte Zone gleichzeitig bestrahlt, daß die Sensoreinrichtung (22) so eingerichtet ist, daß sie die ganze Kontrollzone gleichzeitig erfaßt und daß die Auswähleinrichtung (26, 27, 28) so eingerichtet ist, daß sie auf Grund der ganzen erfaßten Strahlung die Lage des Gegenstandes in der Kontrollzone feststellt.

10. Vorrichtung zum Entdecken eines einer großen Kontrollzone befindlichen Gegenstandes (14), der ein rückstrahlendes Material (15) besitzt, das geeignet ist, einfallende elektromagnetische Strahlung in einer die Einfallsachse umgebenden, konzentrierten Zone zu reflektieren, und zum Gewinnen von Information über den Gegenstand, wobei die Vorrichtung umfaßt:

eine Einrichtung (20) zum Bestrahlen der Zone mit elektromagnetischer Strahlung von einer Quelle (20), die sich gegenüber der Zone in einer vorherbestimmten Lage besitzt, in der die Quelle für die von der Quelle kommende Strahlung eine bekannte Einfallsachse bestimmt;

eine Sensoreinrichtung (22) zum Erfassen von in der Zone vorhandener elektromagnetiseher Strahlung, die von Gegenständen in der Zone reflektiert wird, wobei die Sensoreinrichtung im Bereich der von der Bestrahlungsquelle (20) ausgehenden Einfallsachse angeordnet ist und daher Strahlung empfängt, die von der Bestrahlungsquelle kommt und von dem rückstrahlenden Material reflektiert wird; und

eine Einrichtung (29) zum Gewinnen von Information aus der von dem rückstrahlenden Material kommenden, erfaßten Strahlung;

gekennzeichnet durch eine Einrichtung zum Teilen der erfaßten Strahlung in einzelne Segmente und zum Identifizieren eines eigenen Ortes für jedes Segment;

eine Einrichtung zum Messen der Stärke der in jedem der Segmente vorhandenen elektromagnetischen Strahlung; und

eine Einrichtung (26, 27, 28) zur Auswahl nur jener Segmente der Zone, in denen die Stärke der erfaßten elektromagnetischen Strahlung über einem vorherbestimmten Wert liegt, der für diffuse Reflexion typisch ist, so daß eine Tendenz zum Ausscheiden von Strahlung vorhanden ist, die von in der Zone liegenden Bereichen reflektiert ird, die nicht durch das rückstrahlende Material bestimmt werden.

11. Vorrichtung nach Anspruch 10, dadurch gekennzeichnet, daß die Einrichtung zum Gewinnen von Information eine elektrische Schaltung besitzt, die zum Feststellen der Geschwindigkeit des Gegenstandes dient und eine Analog-Digital-Prozessor (29) besitzt.

12. Vorrichtung nach Anspruch 10, dadurch gekennzeichnet, daß die Einrichtung zum Gewinnen von Information

eine Einrichtung zum getrennten Erfassen von Konfigurationen umfaßt, die von einander benachbarten ausgewählten Segmenten gebildet werden, in denen die elektromagnetische Strahlung ungefähr dieselbe Stärke hat;

ferner eine Einrichtung zum Vergleich jeder der getrennt erfaßten Konfigurationen mit einer Mehrzahl von bekannten Konfigurationen verglichen wird, die eine bekannte Identität haben und aus Segmenten bestehen, für die die Beziehung zwischen der Stärke der elektromagnetischen Strahlung und dem Ort bekannt ist; und

eine Einrichtung zum Identifizieren der getrennt erfaßten Konfigurationen auf Grund der Identität der bekannten Konfigurationen.

## Revendications

1. Procédé pour détecter et identifier un objet se trouvant dans les limites d'une zone d'interrogation, comprenant:

l'incorporation à l'objet (14) d'une matière rétroréfléchissante (15) destinée à réfléchir un rayonnement électromagnétique incident en un cône concentré entourant les axes d'incidence; l'irradiation de la zone par un rayonnement électromagnétique grâce à une source (20) ayant une localisation prédéterminée par rapport à la zone, en établissant ainsi un axe connu d'incidence pour le rayonnement venant de la source; la détection, par un dispositif détecteur (22) de la zone du rayonnement électromagnétique qui est réfléchi depuis les objets se trouvant dans la zone; la localisation du dispositif détecteur (22) au voisinage de l'axe connu d'incidence partant de la source d'irradiation (20) en recevant ainsi un rayonnement provenant de la source d'irradiation et réfléchi par la matière rétroréfléchissante, mais avec tendance à l'élimination du rayonnement provenant de sources de rayonnement, qui est réfléchi de manière spéculaire par des aires de la zone susdite; la sélection (26, 27, 28) du rayonnement détecté, qui est réfléchi par la matière rétroréfléchissante; et le prélèvement d'informations depuis l'objet comportant la matière rétroréfléchissante, caractérisé en ce que l'objet susdit a une position et une orientation inconnues dans la zone d'interrogation susdite; cette zone d'interrogation est plus grande que la matière rétroréfléchissante se trouvant sur l'objet; l'irradiation comprend l'irradiation de la totalité de la zone susdite en une fois; la détection comprend la détection de la totalité de la zone d'interrogation en une fois; et un rayonnement est choisi parmi la totalité du rayonnement décelé susdit pour localiser l'objet dansla zone d'interrogation.

2. Procédé suivant la revendication 1, dans lequel le choix du rayonnement détecté est encore caractérisé par:la division du rayonnement réfléchi ainsi détecté en un réseau de segments individuels et l'identification d'une localisation séparée pour chaque segment; la mesure de la grandeur du rayonnement électromagnétique présent dans chaque segment; la sélection des seuls segments de la zone qui ont une grandeur du rayonnement électromagnétique supérieure à une valeur prédéterminée, cette valeur étant un maximum typique pour une réflexion diffuse; la détermination d'au moins une aire cible consistant en segments choisis adjacents, tout en ne prenant pas en considération toutes les aires de la zone qui ne sont pas dans une aire cible, en ne tenant pas compte ainsi du rayonnement qui est réfléchi depuis les aires de la zone qui ne sont pas définies par la matière rétroréfléchissante.

3. Procédé de détection et d'identification par machine d'informations relatives à un objet (14) d'une position et d'une orientation inconnues dans une grande zone d'interrogation, cet objet comportant une matière rétroréfléchissante (15) conçue pour réfléchir le rayonnement électromagnétique incident en une cône concentré entourant les axes d'incidence, ce procédé comprenant: l'irradiation de la zone par un rayonnement électromagnétique grâce à une source (20) d'une localisation prédéterminée par rapport à la zone, en établissant ainsi un axe connu d'incidence pour le rayonnement provenant de la source; la détection (22) de la zone du rayonnement électromagnétique qui est réfléchi depuis des objets se trouvant dans la zone; la localisation du dispositif détecteur (22) au voisinage de l'axe connu d'incidence partant de la source d'irradiation, pour qu'il reçoive ainsi un rayonnement provenant de la source d'irradiation et réfléchi par la matière rétroréfléchissante; l'extraction (29) d'informations concernant l'objet depuis le rayonnement réfléchi de l'aire cible, caractérisé par: la division du rayonnement réfléchi ainsi détecté en un réseau de segments individuels et l'identification d'une localisation distincte pour chaque segment; la mesure de la grandeur du rayonnement électromagnétique présent dans chaque segment; la sélection des seuls segments de la zone ayant une grandeur du rayonnement électromagnétique supérieure à une valeur prédéterminée, cette valeur étant un maximum typique pour la réflexion diffuse, en ne tenant pas compte ainsi du rayonnement réfléchi de manière diffuse, et la détermination d'au moins une aire cible consistant en segments choisis adjacents, tout en ne prenant pas en considération toutes les aires de la zone qui ne se trouvent pas dans l'aire cible, en ne tenant ainsi pas compte du rayonnement qui est réfléchi depuis des aires de la zone, non définies par la matière rétroréfléchissante.

4. Procédé suivant la revendication 1 ou 3, dans lequel l'extraction des informations est en outre caractérisée par: la détermination de l'intensité du rayonnement provenant de la source; la détermination de l'intensité du rayonnement réfléchi depuis la matière rétroréfléchissante; la détermination de la réduction d'intensité du rayonnement rétroréfléchissant comparativement au rayonnement de la source; la comparaison de cette réduction déterminée d'intensité avec une relation prévue entre l'intensité du rayonnement et la distance parcourue par ce rayonnement, en déterminant de la sorte la distance de la matière rétroréfléchie par rapport à la source; la répétition, après une période de temps prédéterminée, de la détermination de l'intensité du rayonnement provenant de la source et de la matière rétroréfléchissante, de la détermination de la réduction d'intensité et de la comparaison susdite de la réduction déterminée avec la relation prévue entre la réduction d'intensité et la distance, en déterminant de la sorte une seconde distance de la matière rétroréfléchissante par rapport à la source; la détermination du changement entre la première et la seconde distance de la matière rétroréfléchissante par rapport à la source; et la division de ce changement déterminé par le temps prédéterminé, en déterminant de la sorte la vitesse de l'objet comportant la matière rétroréfléchissante.

5. Procédé suivant la revendication 1 ou 3, dans lequel l'extraction des informations est en outre caractérisée par: la détermination du temps nécessaire pour que le rayonnement aille de la source (20) à la matière rétroréfléchissante (15) et ensuite au dispositif détecteur (22); la multiplication de ce temps déterminé par la vitesse connue du rayonnement, en déterminant de la sorte la distance entre la matière rétroréfléchissante et la source; la répétition de ces déterminations après une période de temps prédéterminée, et la division du changement résultant de distance par la période de temps pour déterminer ainsi la vitesse de l'objet.

6. Procédé suivant la revendication 1 ou 3, dans lequel l'extraction des informations est en outre caractérisée par: la séparation de configurations formées par des segments choisis adjacents, qui ont une grandeur à peu près égale de rayonnement électromagnétique; la comparaison de chacune des configurations isolées avec une série de configurations connues ayant une identité connue et consistant en segments présentant une relation connue entre leurs grandeurs et leurs localisations; la sélection des seules configurations isolées dans lesquelles cette comparaison révèle une équivalence pratique par rapport aux configurations connues; et l'identification des configurations isolées déterminées comme étant pratiquement équivalentes des configurations connues, sur la base de l'identité de ces configurations connues.

7. Procédé suivant la revendication 1, caractérisé en outre en ce que: le choix du rayonnement détecté susdit est basé sur une détermination que ce rayonnement détecté a une grandeur supérieure à une valeur prédéterminée qui est typique de la réflexion diffuse, en localisant ainsi la matière rétroréfléchissante et l'objet; et en ce que ce procédé comprend en outre le traitement du rayonnement choisi susdit après les opérations de sélection et de localisation pour extraire des informations de l'objet comportant la matière rétroréfléchissante, ce traitement étant distinct dans le temps et dans le type des opérations susdites de sélection et de localisation.

8. Procédé suivant l'une quelconque des revendications précédentes, caractérisé en outre en ce que l'irradiation est réalisée par un rayonnement électromagnétique qui se situe au-delà de la gamme des fréquences associées à la lumière visible.

9. Appareil de détection et d'identification d'un objet (14) se trouvant dans une zone d'interrogation, cet objet comportant une matière rétroréfléchissante (15) destinée à réfléchir un rayonnement électromagnétique incident en un cône concentré entourant les axes d'incidence, cet appareil comprenant: un dispositif (20) destiné à irradier la zone par un rayonnement électromagnétique grâce à une source (20) d'une localisation prédéterminée par rapport à la zone, en établissant de la sorte un axe connu d'incidence pour le rayonnement provenant de la source; un dispositif détecteur (22) destiné à déceler la zone du rayonnement électromagnétique qui est réfléchi depuis des objets se trouvant dans cette zone, ce dispositif détecteur étant localisé au voisinage de l'axe connu d'incidence partant de la source d'irradiation (20), pour recevoir ainsi le rayonnement provenant de la source d'irradiation et réfléchi par la matière rétroréfléchissante; des moyens de sélection (26, 27, 28) agencés pour détecter le rayonnement qui est réfléchi par la matière rétroréfléchissante; et un dispositif (29) destiné à l'extraction des informations depuis l'objet comportant la matière rétroréfléchissante, caractérisé en ce que l'objet est d'une position et d'une orientation inconnues dans la zone d'interrogation susdite, la source (20) produit une zone d'interrogation qui est plus grande que la matière rétroréfléchissante susdite se trouvant sur l'objet et est agencée pour irradier la totalité de cette zone en une fois, le dispositif détecteur (22) détecte la totalité de la zone d'interrogation en une fois, et les moyens de sélection (26, 27, 28) sont agencés pour localiser l'objet se trouvant dans la zone d'interrogation à partir de la totalité du rayonnement détecté susdit.

10. Appareil pour détecter et extraire des informations concernant un objet (14) dans les limites d'une grande zone d'interrogation, cet objet comportant une matière rétroréfléchissante (15) conçue pour réfléchir un rayonnement électromagnétique incident en un cône concentré entourant les axes d'incidence, cet appareil comprenant: un dispositif (20) destiné à irradier la zone, ayant une localisation prédéterminée par rapport à cette zone, en établissant de la sorte une axe connu d'incidence pour le rayonnement allant du dispositif d'irradiation à la zone; un dispositif (22) destiné à déceler le rayonnement qui est réfléchi depuis les objets localisés dans la zone, ce dispositif comprenant un détecteur localisé au voisinage de l'axe d'incidence susdit du dispositif d'irradiation et disposé ainsi pour recevoir de façon optimale le rayonnement rétroréfléchi provenant de la matière rétroréfléchissante; et un dispositif (29) destiné à extraire des informations depuiis le rayonnement décelé depuis la matière rétroréfléchissante, caractérisé par: des moyens pour diviser le rayonnement décelé en un réseau de segments individuels et pour identifier une localisation distincte pour chaque segment; des moyens pour mesurer la grandeur du rayonnement électromagnétique présent dans chacun de ces segments; et des moyens (26, 27, 28) pour ne choisir que les segments de la zone qui ont une grandeur du rayonnement électromagnétique détecté, se situant au-dessus d'une valeur prédéterminée qui est typique de la réflexion diffuse, en tendant ainsi à éliminer le rayonnement qui est réfléchi depuis des aires de la zone, qui ne sont pas définies par la matière rétroréfléchissante.

11. Appareil suivant la revendication 10, dans lequel les moyens prévus pour extraire des informations sont en outre caractérisés par un circuit électrique destiné à déterminer la vitesse de l'objet, ce circuit comprenant un processeur analogique-numérique.

12. Appareil suivant la revendication 10, dans lequel les moyens prévus pour extraire les informations sont en outre caractérisés par: des moyens pour isoler des configurations formées par des segments choisis adjacents, qui ont une grandeur à peu près égale de rayonnement électromagnétique; des moyens pour comparer chacune des configurations isolées à une série de configurations connues ayant une identité connue et consistant en segments ayant une relation connue entre leurs grandeurs et leurs localisations; et des moyens pour identifier les configurations isolées sur la base de l'identité des configurations connues.

FIG.1

FIG.2

FIG.3